# EUROPÄISCHE PATENTSCHRIFT

(11) **EP 2 473 723 B1**
(45) Veröffentlichungstag und Bekanntmachung des Hinweises auf die Patenterteilung: **10.04.2019**
(21) Anmeldenummer: 10740626.6
(22) Anmeldetag: 04.08.2010
(51) Int. Cl.: F02B 29/04, F28F 9/00, F28F 9/02, F28D 7/16, F02M 26/32

(54) **GASKÜHLER FÜR EINEN VERBRENNUNGSMOTOR**
GAS COOLER FOR AN INTERNAL COMBUSTION ENGINE
REFROIDISSEUR DE GAZ POUR UN MOTEUR À COMBUSTION

(30) Priorität: 01.09.2009 DE 102009039569
(43) Veröffentlichungstag der Anmeldung: 11.07.2012
(73) Patentinhaber: MAHLE Behr GmbH & Co. KG, 70469 Stuttgart (DE)
(72) Erfinder: KEERL, Björn, 74343 Sachsenheim (DE); LORCH, Elisabeth, 72348 Rosenfeld (DE)
(74) Vertreter: Grauel, Andreas
(86) Internationale Anmeldenummer: PCT/EP2010/061340
(87) Internationale Veröffentlichungsnummer: WO 2011/026704

(56) Entgegenhaltungen:
- EP-A2- 1 329 610
- FR-A1- 2 306 421
- FR-A1- 2 873 433
- JP-A- 2001 248 448
- US-A1- 2003 037 913

## Beschreibung

Die Erfindung betrifft einen Gaskühler für einen Verbrennungsmotor nach dem Oberbegriff des Anspruchs 1 .

Es ist bekannt, Ladeluftkühler zur indirekten Kühlung eines Gasstroms eines Verbrennungsmotors vorzusehen, bei denen ein Wärmetauscher in ein von der Ladeluft durchströmtes Gehäuse eingesetzt ist. Dabei sind an dem Wärmetauscher feste Anschlüsse zur Anbindung einer Kühlfluidleitung vorgesehen. Aufgrund der festen Ausbildung der Anschlussstutzen ist deren Anordnung relativ zu dem Gehäuse und zu der Einschubrichtung Beschränkungen unterworfen, wie in US2003/0037913 .

Es ist die Aufgabe der Erfindung, einen Gaskühler für einen Verbrennungsmotor anzugeben, der eine besonders flexible Einbaumöglichkeit aufweist.

Diese Aufgabe wird für einen eingangs genannten Gaskühler erfindungsgemäß mit den kennzeichnenden Merkmalen des Anspruchs 1 gelöst. Durch die Ausbildung des Anschlusses mit einem ersten, mit dem Wärmetauscher verbundenen Anschlussteil und einem zweiten, mit dem ersten Anschlussteil von außen verbindbarem Anschlussteil kann zum Beispiel der Wärmetauscher zunächst in den Gaskanal bzw. ein Gehäuse eingesetzt werden, wonach das zweite Anschlussteil, zum Beispiel unter Durchgreifung einer Öffnung in dem Gaskanal, an das erste Anschlussteil angesetzt wird. Hierdurch ist eine vielseitige Positionierung der Anschlüsse an dem Wärmetauscher bei gegebener Ausformung des Gaskanals ermöglicht. Zudem kann der Wärmetauscher im Hinblick auf ein Baukastensystem gestaltet werden, bei dem die Anschlüsse je nach Anforderungen an verschiedenen Positionen des Gaskanals vorliegen können.

Unter einem Gaskanal im Sinne der Erfindung wird allgemein ein Kanal zur Zuführung eines Verbrennungsgases zu dem Verbrennungsmotor verstanden. Dabei kann es sich um reine Ladeluft, ein Luft-Abgas-Gemisch oder auch um rückgeführtes Abgas handeln. Unter einem Gaskanal wird insbesondere auch ein Saugrohrmodul verstanden, das einen zuführenden Kanal sowie eine Verteilung der Verbrennungsluft auf die Zylinder des Verbrennungsmotors, gegebenenfalls einschließlich von Anschlüssen an den Zylinderkopf des Verbrennungsmotors, umfasst.

Gemäß der Erfindung erfolgt durch die Verbindung der beiden Anschlussteile eine zumindest teilweise Festlegung des Wärmetauschers an dem Gaskanal. Hierdurch wird zugleich ermöglicht, zumindest teilweise, gegebenenfalls auch vollständig, auf weitere Festlegemittel wie Schrauben, Klemmen oder Klebemittel zu verzichten.

Bei einer besonders bevorzugten Detailgestaltung ist das erste Anschlussteil mit dem zweiten Anschlussteil verschraubbar. Besonders bevorzugt weist dabei das zweite Anschlussteil ein Außengewinde auf, das in ein Innengewinde des ersten Anschlussteils einschraubbar ist. Hierdurch kann der Wärmetauscher ohne vorragende Teile ausgebildet sein und besonders raumsparend und vielseitig in den Gaskanal einschiebbar sein. Die Ausbildung der Verbindung der Anschlussteile durch eine Verschraubung hat zudem den wesentlichen Vorteil, dass selbst bei Defekten wie dem Versagen einer Dichtung nur ein geringer Leckstrom des Fluids in den Gaskanal eintreten kann und somit die Gefahr eines den Verbrennungsmotor zerstörenden Wasserschlags bedingt durch die Verbindungsmethode der Verschraubung der Anschlussteile weitgehend vermieden ist. Alternativ ist es auch möglich, dass das zweite Anschlussteil ein Innengewinde aufweist, das in ein Außengewinde des ersten Anschlussteils einschraubbar ist.

Bei der Erfindung ist an zumindest einem der beiden Anschlussteile ein Dichtglied, insbesondere in Form einer O-Ringdichtung, vorgesehen. Besonders bevorzugt ist an jedem der beiden Anschlussteile ein Dichtglied vorgesehen. Durch das Dichtglied kann zum einen eine Abdichtung des Fluids gegenüber dem Gaskanal erfolgen und zum anderen eine Abdichtung des Gaskanals gegenüber dem Außenraum. Bei Vorsehen von zwei Dichtgliedern kann zudem eine besonders sichere Abdichtung des Fluids auch gegenüber dem Außenraum erfolgen.

Allgemein vorteilhaft haben die Anschlussteile jeweils einen radialen Kragen, wobei eine Gehäusewand des Gaskanals zumindest reibschlüssig zwischen den Kragen aufgenommen ist. Hierdurch lässt sich zum Einen eine gute Abdichtung und zum Anderen eine gute Halterung des Wärmetauschers an dem Gaskanal auf einfache Weise verwirklichen. Eine ausreichende Ausdehnung der Kragen bedingt zudem eine Verteilung der angreifenden Kräfte auf einen größeren Bereich der Gehäusewand, so dass auch ein schwerer Wärmetauscher an einer vergleichsweise schwach dimensionierten Gaskanalwand, die zum Beispiel aus Kunststoff bestehen kann, sicher gehalten ist. Eine in diesem Sinne besonders bevorzugte Dimensionierung der Anschlussteile liegt vor, wenn die Kragen jeweils einen Außendurchmesser aufweisen, der wenigstens etwa dem Doppelten eines Innendurchmessers des fluidführenden Durchlasses der Anschlussteile beträgt.

Allgemein vorteilhaft ist das erste Anschlussteil stoffschlüssig mit dem Wärmetauscher verbunden, insbesondere mittels Verlöten oder Verschweißen. Auf diese Weise ist eine einfache, fluiddichte und mechanisch belastbare Anbindung des ersten Anschlussteils an den Wärmetauscher gegeben. Insbesondere können das erste Anschlussteil und der restliche Wärmetauscher als gemeinsam in einem Lötofen verlöteter Block ausgebildet sein.

Allgemein bevorzugt hat das zweite Anschlussteil eine Ausformung zum Anschluss einer Fluidleitung, die besonders bevorzugt als Wulst oder als Schnellkupplung ausgebildet ist. Bei Ausformung als Wulst kann ein Schlauch über das zweite Anschlussteil gesteckt und mittels zum Beispiel einer Schlauchklemme gesichert werden. Es kann sich aber auch um eine Schnellkupplung nach beliebiger bekannter Bauart handeln. Bei Ausführungsformen, bei denen eine Einschubrichtung des Wärmetauschers und eine Richtung der Fluidführung in dem Anschluss nicht parallel zueinander verlaufen, kommen die erfindungsgemäßen Merkmale besonders vorteilhaft zum Tragen.

Bei einer möglichen Ausführungsform kann der Wärmetauscher mittels der Anschlussteile an einem Deckel des Gaskanals festlegbar sein, wobei der Deckel gemeinsam mit dem Wärmetauscher an dem Gaskanal festlegbar ist. Auf diese Weise kann zunächst eine einfache und zuverlässige fluiddichte Montage an dem Deckel erfolgen, wonach der Deckel mit dem daran festgelegten Wärmetauscher in den Gaskanal unter häufig ungünstigen Montagebedingungen im Motorraum eingesetzt wird. Eine solche Anordnung und Montagereihenfolge ist besonders für Wartungszwecke vorteilhaft.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele der Erfindung beschrieben und anhand der anliegenden Zeichnungen näher erläutert.
- Fig. 1: zeigt eine räumliche Gesamtansicht eines erfindungsgemäßen Gaskühlers gemäß einem ersten Ausführungsbeispiel.
- Fig. 2: zeigt eine teilweise Schnittansicht durch den Gaskühler aus Fig. 1 im Bereich eines Fluidanschlusses.

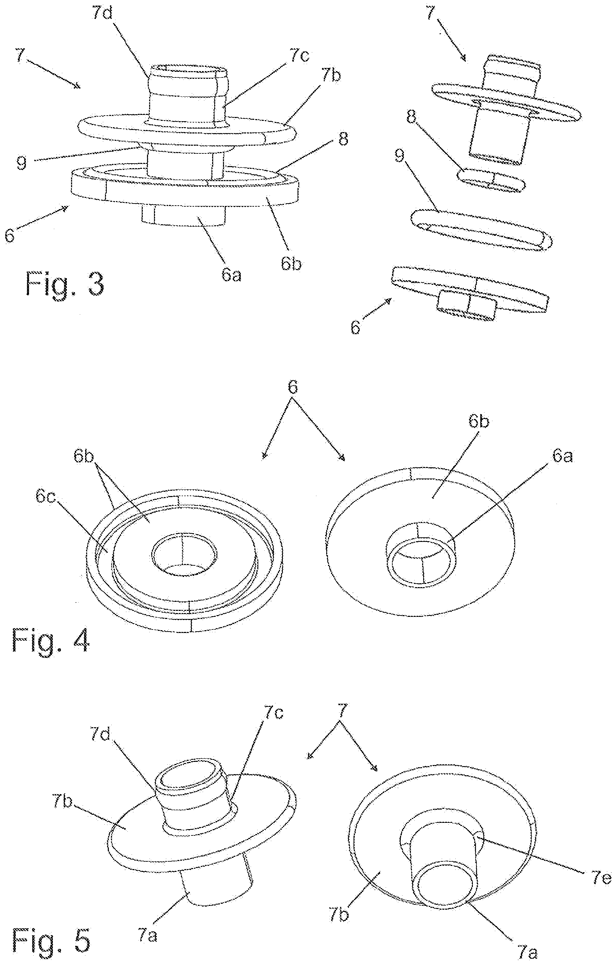

- Fig. 3: zeigt zwei räumliche Darstellungen eines Anschlusses des Gaskühlers aus Fig. 1.
- Fig. 4: zeigt zwei räumliche Ansichten eines ersten Anschlussteils des Anschlusses aus Fig. 3.
- Fig. 5: zeigt zwei räumliche Ansichten eines zweiten Anschlussteils des Anschlusses aus Fig. 3.
- Fig. 6: zeigt eine räumliche Darstellung des Gaskühlers aus Fig. 1 im Zuge einer Montage.
- Fig. 7: zeigt eine räumliche Darstellung eines zweiten Ausführungsbeispiels der Erfindung im Zuge einer Montage.

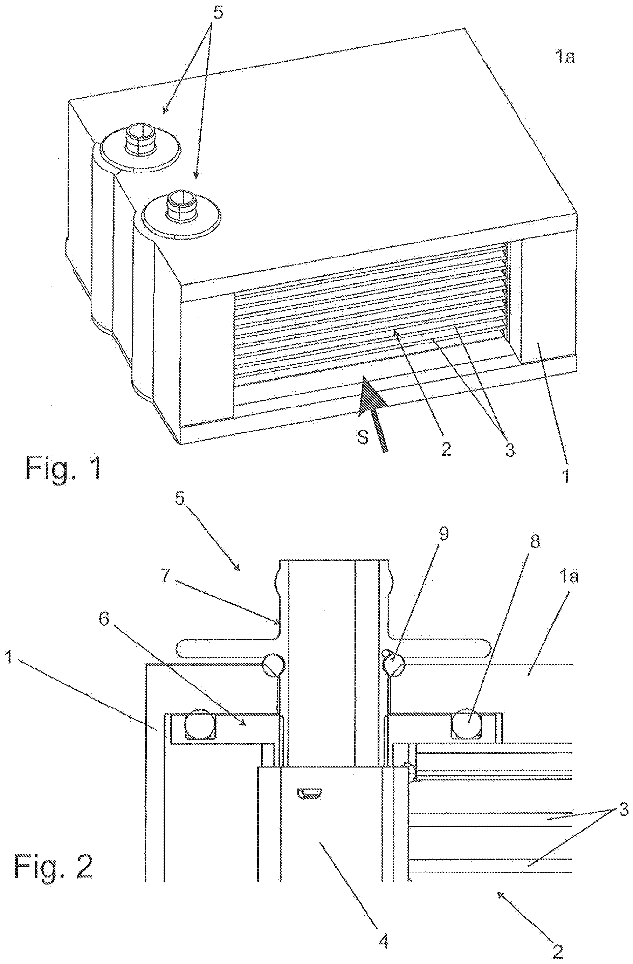

Der in Fig. 1 gezeigte erfindungsgemäße Gaskühler gemäß einem ersten Ausführungsbeispiel umfasst einen Gaskanal 1, der als Gehäuse aus Kunststoff zur Durchleitung eines Verbrennungsgases für einen Verbrennungsmotor entlang einer Strömungsrichtung S ausgeformt ist. In dem Gaskanal 1 ist ein Wärmetauscher 2 angeordnet, der als von einem flüssigen Kühlmittel als Kühlfluid durchströmbarer Stapel von Flachrohren 3 mit dazwischen angeordneten Rippen (nicht dargestellt) ausgebildet ist.

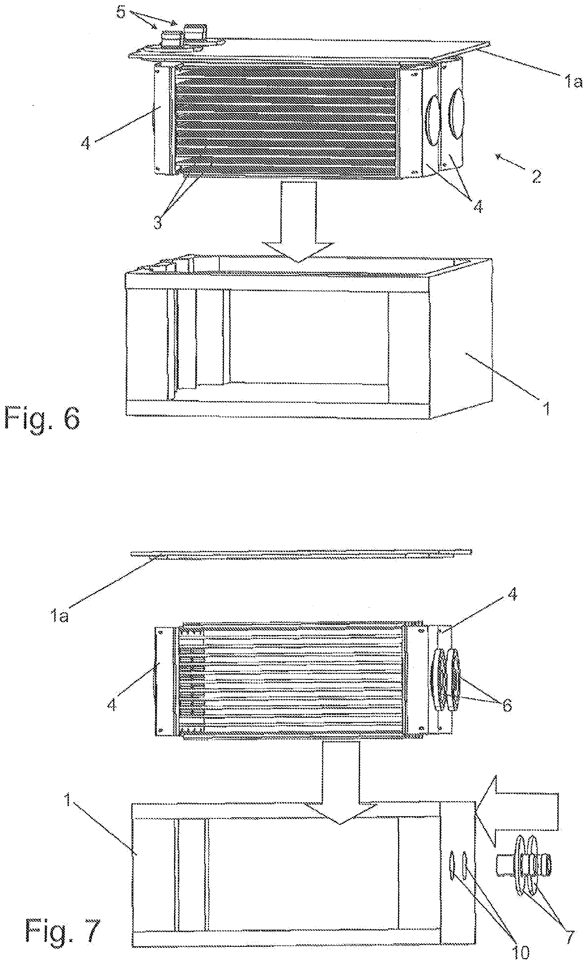

Endseitig der Flachrohre 3 sind Sammler 4 angeordnet, durch die das Kühlmittel auf die Flachrohre verteilt wird (siehe insbesondere Fig. 6). Zur Zuführung und Abführung des Kühlmittels ist jeweils ein Anschluss 5 an den Sammlern 4 vorgesehen. Vorliegend befinden sich die Anschlüsse 5 jeweils an seitlichen Abschlussblechen der Sammler, so dass die Strömungsrichtung des Fluids in den Anschlüssen jeweils senkrecht zu der Erstreckungsrichtung der Flachrohre 3 verläuft.

Jeder der beiden Anschlüsse 5 ist konstruktiv gleich aufgebaut und umfasst ein erstes Arischlussteil 6 sowie ein zweites Anschfussteil 7. Das erste Anschlussteil 6 ist als rotationssymmetrisches Bauteil mit einem hohlzylindrischen Halsstück 6a und einem radial von dem Halsstück 6a abstehenden Kragen 6b ausgebildet. In dem Kragen 6b befindet sich eine nutartige, kreisringförmige Vertiefung 6c zur Einlage eines ersten Dichtglieds in Form einer O-Ring-Dichtung 8.

Das zweite Anschlussteil 7 ist ebenfalls als im Wesentlichen rotationssymmetrischer Körper ausgebildet, welcher einen hohlzylindrischen Schraubstutzen 7a mit einem darauf vorgesehenen Außengewinde und einen von dem Schraubstutzen 7a radial abstehenden Kragen 7b umfasst.

Auf der dem Schraubstutzen 7a gegenüberliegenden Seite des Kragens 7b ragt eine Ausformung zum Anschluss einer Fluidleitung vor, die als hohlzylindrischer Abschnitt 7c mit einem Wulst 7d ausgebildet ist. Ober den Abschnitt 7c mit dem Wulst 7d kann ein Schlauch zur Flusdzufübrung oder Abführung geschoben und mittels einer Schlauchklemme gesichert werden.

Auf der Seite des Schraubstutzens ist in dem Kragen 7b zudem eine an den Schraubstutzen 7a angrenzende, ringförmige Ausnehmung 7e zur Einlage einer zweiten O-Ring-Dichtung 9 vorgesehen.

Die beiden Anschlussteile 7, 8 können jeweils als Blechformteile, zum Beispiel durch Tiefziehen aus einer Blechscheibe, ausgeformt sein. Insbesondere bei dem ersten Anschlussteil 6 kann eine Lotplattierung zumindest auf der halsstückseitigen Seite des Kragens vorgesehen sein. Das erste Anschlussteil 6 ist mittels des Halsstücks 6a in eine entsprechende Öffnung des Sammlers 4 des Wärmetauschers 2 eingesetzt und flächig verlötet. Insbesondere wird das erste Anschlussteil 6 zusammen mit den aus lotplattierten Blechen geformten Sammlern 4 und den in Durchzüge in Böden der Sammler 4 eingesteckten Flachrohren und Rippen gemeinsam in einem Lötofen zu einem Block verlötet.

In dem Halsstück 6a des ersten Anschlussteils 6 ist ein Innengewinde ausgeformt, in das der hohlzylindrische Schraubstutzen 7a des zweiten Anschlussteils 7 mit seinem Außengewinde einschraubbar ist.

Wie die Schnittzeichnung Fig. 2, insbesondere in Verbindung mit der explodierten Ansicht des Gaskühlers gemäß Fig. 6 zeigt, erfolgt die Montage des Gaskühlers wie folgt: Zunächst wird die erste O-Ring-Dichtung 8 in die Nut 6c des ersten Anschlussteils 6 eingelegt, wonach ein Deckel 1a des Gaskanals 1, in dem zwei Durchbrechungen für die Anschlüsse 5 vorgesehen sind, auf den Wärmetauscher 2 bzw. die ersten Anschlussteile aufgesetzt wird.

Dann werden die zweiten Anschlussteile, in die zuvor die zweiten Ringdichtungen 9 in die Vertiefungen 7e eingelegt wurden, in die ersten Anschlussteile 6 eingeschraubt, wobei die hohlzylindrischen Schraubstutzen 7a die Durchbrechungen in dem Deckel 1a durchgreifen. Wie die Schnittansicht Fig. 2 verdeutlicht, ist der Deckel 1a somit reibschlüssig klemmend zwischen den Kragen 6b, 7b der Anschlussteile 6, 7 gehalten, wobei zugleich die Ringdichtungen 8, 9 eine Abdichtung des Fluids gegenüber dem Innenraum des Gaskanals 1 sowie gegenüber dem Außenraum als auch eine gasseitige Abdichtung zwischen Innenraum und Außenraurn gewährleisten.

Die Kragen 6b, 7b ragen gemäß der maßstabsgerechten Zeichnung Fig. 2 dabei radial so weit über die Ränder der Durchbrechung in dem Deckel 1a hinaus, dass eine besonders großflächige und stabile reibschlüssige, klemmende Halterung gewährleistet ist.

Gemäß der in Fig. 6 angedeuteten Einschubrichtung wird dann der Wärmetauscher 2 mit dem daran festgelegten Deckelteil 1a in den Gaskanal 1 senkrecht zu der Durchströmungsrichtung des Gases S eingesetzt, wobei der Deckel 1a auf dem Rand des Gaskanals 1 zu liegen kommt und mittels Verschrauben, Verkleben oder anderen geeigneten Maßnahmen gasdicht festgelegt wird.

Fig. 7 zeigt eine weitere Ausführungsform der Erfindung, bei der die Anschlüsse 5 bezüglich der Fluidströmung senkrecht zu der Einschubrichtung des Wärmetauschers 2 ausgerichtet sind. Der waagerechte Pfeil, der die Einschraubrichtung der zweiten Anschlussteile 7 verdeutlicht, entspricht dabei zudem der Strömungsrichtung des Fluids im Anschluss 5 und steht senkrecht zu der durch den senkrechten Teil angedeuteten Einschubrichtung des Wärmetauschers 2 in den Gaskanal 1. Bei dieser Ausführungsform wird zunächst der Wärmetauscher 2 in den Gaskanal 1 eingeschoben, bis eine Überdeckung der ersten Anschlussteile 6 mit Durchbrechungen 10 in der Wand des Gaskanals 1 vorliegt. Sodann werden zur Vervollständigung der Anschlüsse 5 die zweiten Anschlussteile 7 in die Durchbrechungen 10 gesteckt und in die ersten Anschlussteile 6 eingeschraubt. Mittels der Kragen 6b, 7b sowie der Ringdichtungen 8, 9 wird sowohl eine Abdichtung der Anschlussteile 6, 7 als auch eine mechanische Halterung des Wärmetauschers 2 an dem Gaskanal 1 erzielt.

Nachfolgend wird der Deckel 1a auf den Gaskanal 1 aufgesetzt und dichtend festgelegt.

Es versteht sich, dass ergänzend zu den Ringdichtungen 8, 9 auch weitere abdichtende Maßnahmen wie etwa eine Verklebung oder die Verwendung eines flüssigen Gewindedichtmittels erfolgen können. Solche weiteren Maßnahmen stehen bevorzugt einer Lösbarkeit der Verschraubungen der Anschlussteile 6, 7 nicht im Wege, wodurch eine Wartung bzw. ein Austausch des in dem Gaskanal 1 angeordneten Wärmetauschers 2 ermöglicht ist.

## Patentansprüche

1. Gaskühler für einen Verbrennungsmotor, umfassend
einen Gaskanal (1) zur Durchströmung mit einem dem Verbrennungsmotor zugeführten Gasstrom in einer Strömungsrichtung, und
einen in den Gaskanal (1) in einer Einschubrichtung eingesetzten Wärmetauscher (2), wobei der Wärmetauscher (2) zumindest einen Anschluss (5) zur Zuführung oder Abführung eines Fluids zur Kühlung des Gasstroms aufweist,
**dadurch gekennzeichnet,**
**dass** der Anschluss (5) ein erstes, vor einem Einsetzen des Wärmetauschers (2) in den Gaskanal (1) mit dem Wärmetauscher (2) verbundenes Anschlussteil (6) und ein zweites, mit dem ersten Anschlussteil (6) von außen verbindbares Anschlussteil (7) umfasst, wobei durch die Verbindung der beiden Anschlussteile (6, 7) eine zumindest teilweise Festlegung des Wärmetauschers (2) an dem Gaskanal (1) erfolgt, wobei an jedem der beiden Anschlussteile (6, 7) ein Dichtglied (8, 9), insbesondere in Form einer O-Ring-Dichtung, vorgesehen ist, wobei die Anschlussteile (6, 7) jeweils einen radialen Kragen (6b, 7b) aufweisen, wobei eine Gehäusewand (1a) des Gaskanals (1) zumindest reibschlüssig zwischen den Kragen (6b, 7b) aufgenommen ist

2. Gaskühler nach Anspruch 1, **dadurch gekennzeichnet, dass** das erste Anschlussteil (6) mit dem zweiten Anschlussteil (7) verschraubbar ist.

3. Gaskühler nach Anspruch 2, **dadurch gekennzeichnet, dass** das zweite Anschlussteil (7) ein Außengewinde umfasst, das in ein Innengewinde des ersten Anschlussteils (6) einschraubbar ist.

4. Gaskühler nach Anspruch 2, **dadurch gekennzeichnet, dass** das erste Anschlussteil (6) ein Außengewinde umfasst, das in ein Innengewinde des zweiten Anschlussteils (7) einschraubbar ist.

5. Gaskühler nach einem der vorhergehenden Ansprüche, **dadurch gekennzeichnet, dass** das erste Anschlussteil (6) stoffschlüssig mit dem Wärmetauscher (2) verbunden ist, insbesondere mittels Verlöten oder Verschweißen.

6. Gaskühler nach einem der vorhergehenden Ansprüche, **dadurch gekennzeichnet, dass** das zweite Anschlussteil (7) eine Ausformung (7d) zum Anschluss einer Fluidleitung aufweist, insbesondere einen Wulst (7d) oder eine Schnellkupplung.

7. Gaskühler nach einem der vorhergehenden Ansprüche, **dadurch gekennzeichnet, dass** eine Einschubrichtung des Wärmetauschers und eine Richtung der Fluidführung in dem Anschluss (5) nicht parallel zueinander verlaufen.

8. Gaskühler nach einem der vorhergehenden Ansprüche, **dadurch gekennzeichnet, dass** der Wärmetauscher (2) mittels der Anschlussteile (6, 7) an einem Deckel (1a) des Gaskanals (1) festlegbar ist, wobei der Deckel (1a) gemeinsam mit dem Wärmetauscher (2) an dem Gaskanal (1) festlegbar ist.

## Claims

1. A gas cooler for an internal combustion engine, comprising
a gas channel (1) for permeation by a gas flow fed to the internal combustion engine in a flow direction,
and
a heat exchanger (2) inserted into the gas channel (1) in an insertion direction, wherein the heat exchanger (2) has at least one connection (5) for feeding or discharging a fluid for cooling the gas flow,
**characterised in that**
the connection (5) comprises a first connecting part (6) which is connected to the heat exchanger (2) before the heat exchanger (2) is inserted into the gas channel (1), and a second connecting part (7) which is connectable to the first connecting part (6) from the outside, wherein the heat exchanger (2) is at least partially attached to the gas channel (1) by connecting the two connecting parts (6, 7), wherein a sealing member (8, 9), in particular in the form of an 0 ring seal, is provided on each of the two connecting parts (6, 7), wherein the connecting parts (6, 7) each have a radial collar (6b, 7b), wherein a housing wall (1a) of the gas channel (1) is accommodated between the collars (6b, 7b) at least by means of a friction fit.

2. The gas cooler according to claim 1, **characterised in that** the first connecting part (6) may be screwed to the second connecting part (7).

3. The gas cooler according to claim 2, **characterised in that** the second connecting part (7) comprises an outer thread which may be screwed into an inner thread of the first connecting part (6).

4. The gas cooler according to claim 2, **characterised in that** the first connecting part (6) comprises an outer thread which may be screwed into an inner thread of the second connecting part (7).

5. The gas cooler according to one of the preceding claims, **characterised in that** the first connecting part (6) is integrally connected to the heat exchanger (2), in particular by means of soldering or welding.

6. The gas cooler according to one of the preceding claims, **characterised in that** the second connecting part (7) has a projection (7d) for connecting a fluid line, in particular a bead (7d) or a fast-action coupling.

7. The gas cooler according to one of the preceding claims, **characterised in that** an insertion direction of the heat exchanger and a direction of fluid conduction in the connection (5) do not run parallel to each other.

8. The gas cooler according to one of the preceding claims, **characterised in that** the heat exchanger (2) is attachable to a cover (1a) of the gas channel (1) with the aid of the connecting parts (6, 7), wherein the cover (1a) is attachable to the gas channel (1) together with the heat exchanger (2).

## Revendications

1. Refroidisseur de gaz pour un moteur à combustion interne, comprenant :
un conduit de gaz (1) servant à la circulation, dans une direction d'écoulement, d'un flux de gaz fourni au moteur à combustion interne, et
un échangeur de chaleur (2) introduit dans le conduit de gaz (1) suivant une direction d'insertion, où l'échangeur de chaleur (2) présente au moins un raccordement (5) servant à l'alimentation ou à l'évacuation d'un fluide prévu pour le refroidissement du flux de gaz,
**caractérisé**
**en ce que** le raccordement (5) comprend une première pièce de raccordement (6) assemblée avec l'échangeur de chaleur (2), avant une introduction de l'échangeur de chaleur (2) dans le conduit de gaz (1), et en ce qu'il comprend une seconde pièce de raccordement (7) pouvant être assemblée, de l'extérieur, avec la première pièce de raccordement (6) où, grâce à l'assemblage des deux pièces de raccordement (6, 7), il se produit une fixation - réalisée au moins partiellement - de l'échangeur de chaleur (2) sur le conduit de gaz (1), où il est prévu, sur chacune des deux pièces de raccordement (6, 7), un élément d'étanchéité (8, 9), en particulier sous la forme d'un joint torique d'étanchéité, où les pièces de raccordement (6, 7) présentent respectivement une collerette radiale (6b, 7b), où une paroi de carter (la) du conduit de gaz (1) est logée au moins par frottement entre les collerettes (6b, 7b).

2. Refroidisseur de gaz selon la revendication 1, **caractérisé en ce que** la première pièce de raccordement (6) peut être vissée avec la seconde pièce de raccordement (7).

3. Refroidisseur de gaz selon la revendication 2, **caractérisé en ce que** la seconde pièce de raccordement (7) comprend un filetage extérieur qui peut être vissé dans un filetage intérieur de la première pièce de raccordement (6).

4. Refroidisseur de gaz selon la revendication 2, **caractérisé en ce que** la première pièce de raccordement (6) comprend un filetage extérieur qui peut être vissé dans un filetage intérieur de la seconde pièce de raccordement (7).

5. Refroidisseur de gaz selon l'une quelconque des revendications précédentes, **caractérisé en ce que** la première pièce de raccordement (6) est assemblée par continuité de matière avec l'échangeur de chaleur (2), en particulier au moyen d'un brasage ou d'un soudage.

6. Refroidisseur de gaz selon l'une quelconque des revendications précédentes, **caractérisé en ce que** la seconde pièce de raccordement (7) présente une partie saillante (7d), en particulier un bourrelet (7d) ou un raccord rapide, servant au raccordement d'une conduite de fluide.

7. Refroidisseur de gaz selon l'une quelconque des revendications précédentes, **caractérisé en ce qu'**une direction d'insertion de l'échangeur de chaleur et une direction du guidage de fluide dans le raccordement (5) s'étendent l'une par rapport à l'autre de façon non parallèle.

8. Refroidisseur de gaz selon l'une quelconque des revendications précédentes, **caractérisé en ce que** l'échangeur de chaleur (2) peut être fixé sur un couvercle (la) du conduit de gaz (1), au moyen des pièces de raccordement (6, 7), où le couvercle (la) peut être fixé sur le conduit de gaz (1), de façon conjointe avec l'échangeur de chaleur (2).
